# EUROPEAN PATENT APPLICATION

(11) **EP 4 087 274 A1**
(43) Date of publication of application: **09.11.2022**
(21) Application number: 21172695.5
(22) Date of filing: 07.05.2021
(51) Int. Cl.: H04R 3/00, G01H 3/00, G01H 7/00

(54) **SYSTEM AND METHOD FOR DETERMINING A SOUND PROPAGATION CHARACTERISTIC**

(71) Applicant: Technische Universität Graz, 8010 Graz (AT)
(72) Inventor: KURZ, Eric, 8010 Graz (AT); KUBIN, Gernot, 8010 Graz (AT)
(74) Representative: Weiser & Voith Patentanwälte Partnerschaft

(57) **Abstract**

The present invention relates to a system (1) and a method for determining a sound propagation characteristic of an environment (2), comprising a sound source (4) configured to be brought to a predetermined first position (A) and to generate a measuring sound (n), a microphone (5) configured to be brought to a predetermined second position (B) and to record the measuring sound (n') propagating to the second position (B), and a processing unit (7) for calculating the sound propagation characteristic from the generated and the recorded measuring sounds (n, u, u'), wherein the sound source (4) is an unmanned rotorcraft with one or more motor-driven rotors (6), and the generated measuring sound (n) is the ego noise of the rotor/s (6) and the motor-drive/s of the rotorcraft (4).

## Description

The present invention relates to a system for determining a sound propagation characteristic of an environment, which system comprises a sound source configured to be brought to a predetermined first position in the environment and to generate a measuring sound at the first position, a microphone configured to be brought to a predetermined second position in the environment, wherein the first and second positions are different, and to record the measuring sound propagating from the first to the second position, and a processing unit connected to the microphone for calculating the sound propagation characteristic from the generated and the recorded measuring sounds. The invention further relates to a method performed by the system.

Acoustic measurements for determining one or more sound propagation characteristics are either performed in an open air environment, i.e., in free field acoustic measuring of, e.g., wind farms, air fields, open air locations such as stadiums etc., or in an indoor environment, i.e., in room acoustic measuring of, e.g., large rooms like concert halls, train stations or airport halls, open-plan offices etc. Methods for room acoustic measuring are standardised, e.g., by the international standards ISO 3382-1:2009, ISO 3382-2:2008 and ISO 3382-3:2012 concerning "Measurement of Room Acoustic Parameters". The methods are based on the principle that a loudspeaker as the sound source generates the measuring sound, e.g., white noise, a chirp or a Dirac pulse, at the first position, the microphone records the measuring sound propagating to the second position, and the processing unit calculates the sound propagation characteristic from the generated and the recorded measuring sounds.

It has been shown, though, by D. de Vries et al., "Spatial Fluctuations in Measures for Spaciousness", Journal of the Acoustical Society of America, vol. 110, no. 2, pp. 947 - 954, August 2001, that even small displacements in the first or second positions may result in significant differences in the measured sound propagation characteristic. Hence, the scope of the measuring results is limited. To broaden this scope, I. B. Witew et al., "Ein Messapparat zur Abtastung von Schallfeldern in Raumen", DAGA 2016 Aachen, March 2016, propose to employ a metal framework carrying an array of microphones each of which is at a different second position for recording the propagated measuring sound generated by the sound source placed at the first position. For each second position, a sound propagation characteristic is calculated in order to determine a sound propagation field of the room therefrom. While resulting in a broader applicability this method requires a large number of microphones and extensive preparation for installing them and is limited by the structural constraints of the metal framework employed.

The number of microphones can be reduced and the preparation simplified by mounting a single microphone to a robotic vehicle, as suggested by M. Uehara et al., "Visualization of Distribution of Room Acoustic Parameters by Using Mobile Robot", Proceedings of the 23rd International Congress on Acoustics, Aachen, Germany, September 2019. Thereby, the microphone is moved successively from one second position to the next for repeated measuring. However, the ground-based vehicle only reaches second positions that are close to ground level and are unobstructed, which is a substantial limitation, e.g., in an auditorium having seats. For three-dimensionally positioning the microphone, B. Borkowski et al., "Automated Measurement System for Room Acoustics - an Initial Feasibility Study", Archives of Acoustics, vol. 40, no. 3, pp. 419-428, 2015, describe a robotic airship ("blimp") carrying the microphone, such that arbitrary (three-dimensional) second positions in the environment can be defined. The blimp is required in order to hold the microphone in place silently at each second position during recording but is difficult to manoeuvre, unsuitable for (windy) outdoor environments, and undesirably affects the sound propagation in the environment due to its size.

It is an object of the present invention to provide a system and a method for determining the sound propagation characteristic of the environment which are easy and flexible in use.

According to a first aspect of the present invention, this object is achieved by a system of the type described at the outset which is distinguished in that the sound source is an unmanned rotorcraft with one or more motor-driven rotors, and in that the generated measuring sound is the ego noise of the rotor/s and the motor-drive/s of the rotorcraft.

The invention is based on the finding that a rotorcraft with one or more motor-driven rotors produces ego noise during flight by its electrical and mechanical motor-drives and rotors that is well suited as measuring sound. Rotorcraft are highly manoeuvrable and available in a wide variety of types and sizes; some rotorcraft even provide automatic flight path control. Moreover, the preparation for determining the sound propagation characteristic is very simple as only the microphone is brought (e.g., fixed) to the second position and the rotorcraft is brought (i.e., flown) to the first position. The system can be used for reciprocal sound propagation measuring such that the positions of the sound source and the microphone are interchangeable and the microphone may be brought, e.g., to the position that is easier to reach. No metal frameworks, no obstructions on the ground, no undesirable influences on the sound propagation characteristic to be determined, and no silence requirements during recording limit the measurement. Moreover, no further sound source has to be provided and placed in the environment. Hence, the system is easy and flexible in use.

A particularly simple structure of the system can be achieved when the microphone is omnidirectional. When, alternatively, the calculation of the sound propagation characteristic by the processing unit shall be facilitated, the microphone is favourably either composed of an array of omnidirectional electromechanical transducers for separately recording the measuring sound propagating to the second position, or composed of a multitude of differently directed coincident unidirectional electromechanical transducers for separately recording the measuring sound propagating to the second position. In each of the aforementioned alternative variants, the direction of the measuring sound propagating to the microphone can be determined when calculating the sound propagation characteristic.

The rotorcraft may be a single-rotor aircraft, i.e., a helicopter. Advantageously, however, the rotorcraft is multirotor. A multirotor rotorcraft, e.g., a coaxial, intermeshing, or tandem helicopter, a bi-rotor rotorcraft, a tricopter, quadcopter, hexacopter, octocopter etc., generates a particularly suitable ego noise and is very easy to manoeuvre.

In a beneficial embodiment, the rotorcraft is further configured to hover at the first position and to sweep the rotational speed of the rotor/s and the motor-drive/s when generating the measuring sound. Thereby, the ego sound generated by the rotorcraft changes such that the calculation of the sound propagation characteristic is enhanced. Vertical oscillation of the rotorcraft due to sweeping can be avoided by inversely sweeping the pitch of the rotor/s and/or by grouping the rotors and motor-drives of a multirotor rotorcraft into inversely sweeping groups.

Favourably, the rotorcraft is further configured to determine its position in the environment when generating the measuring sound, wherein the processing unit is connected to the rotorcraft and configured to consider said determined position as the first position when calculating the sound propagation characteristic. The determined position is more accurate than the predetermined first position which, in turn, improves the accuracy of the calculated sound propagation characteristic.

It shall be noted that the sound propagation characteristic may be of different type, e.g., an energy decay curve, a transfer function etc. In an advantageous embodiment, said sound propagation characteristic calculated by the processing unit is a room impulse response.

In a favourable embodiment, the rotorcraft is configured to fly from one to another one of a plurality of predetermined different first positions and to generate the measuring sound at each first position, wherein the microphone is configured to record, for each of the plurality of first positions, the measuring sound propagating to the second position, and wherein the processing unit is configured to repeat said calculating for each of the plurality of first positions. Local differences in the sound propagation characteristic are, thus, determined. This embodiment particularly benefits from reciprocal sound propagation measuring in that the microphone may be placed, e.g., on the stage of a theatre and the rotorcraft is flown through the auditorium to determine the sound propagation from the stage to the auditorium.

In a particularly advantageous variant thereof, the processing unit is further configured to compute a sound propagation field of the environment from the sound propagation characteristic calculated for the plurality of first positions. The sound propagation field specifies the sound propagation characteristic of the environment also between and/or beyond the plurality of first positions by means of interpolation and/or extrapolation.

According to a second aspect, the invention provides a method for determining a sound propagation characteristic of an environment comprising
bringing a sound source to a predetermined first position in the environment,
bringing a microphone to a predetermined second position in the environment, wherein the first and second positions are different,
generating, by the sound source, a measuring sound at the first position,
recording, by the microphone, the measuring sound propagating to the second position, and
calculating the sound propagation characteristic from the generated and the recorded measuring sounds,
wherein the sound source is an unmanned rotorcraft with one or more motor-driven rotors, and wherein the generated measuring sound is the ego noise of the rotor/s and the motor-drive/s of the rotorcraft.

With respect to advantages of the method and further embodiments thereof, reference is made to the above statements on the present system.

The invention will now be described in further detail by means of exemplary embodiments thereof under reference to the enclosed drawings, in which:
Fig. 1 shows an environment with a system for determining a sound propagation characteristic according to the invention in a schematic perspective view;
Fig. 2 shows the sound pressure level of an ego sound generated by a rotorcraft of the system of Fig. 1 in a diagram over the frequency; and
Figs. 3 and 4 show a signal flow for determining the sound propagation characteristic in the system of Fig. 1 without (Fig. 3) and with (Fig. 4) a further microphone on the rotorcraft, respectively, in a signal flow graph.

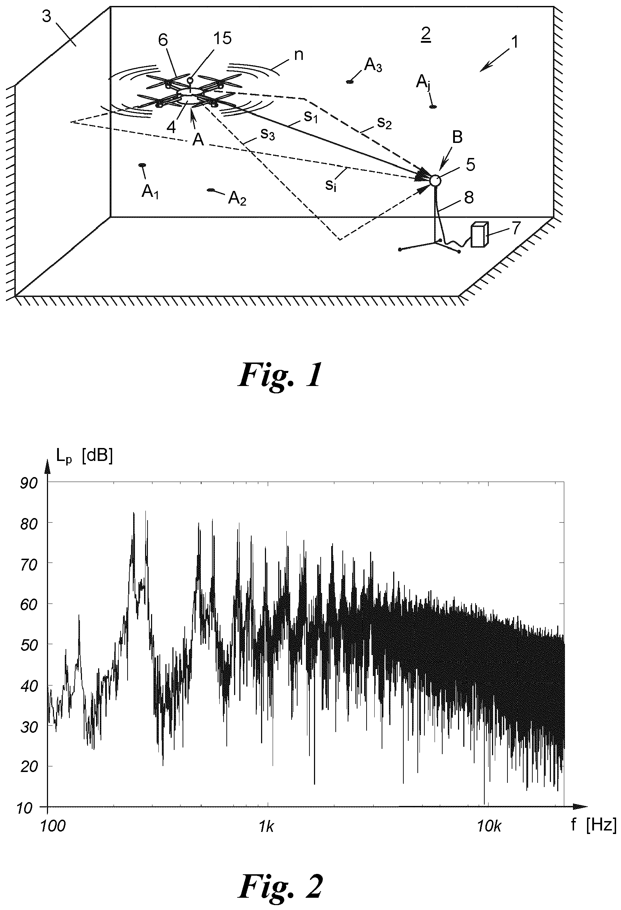

Fig. 1 shows a system 1 for determining a sound propagation characteristic of an environment 2. In this example, the environment 2 is an indoor environment 2 with boundaries 3 (here: walls, a floor and a ceiling, not shown) that - at least partly - reflect sound propagating from a sound source 4 to a microphone 5 in the environment 2. Thereby, several sound propagation paths s₁, s₂, ... generally sᵢ, form in the environment 2, e.g., a direct sound propagation path s₁ between the sound source 4 and the microphone 5 and one or more (here: three) sound propagation paths sᵢ reflected at one or more boundaries 3 of the environment 2 or objects (not shown) within the environment 2. Alternatively, the environment 2 may be an outdoor environment (not shown) in which the direct sound propagation path usually prevails. The sound propagation characteristic may be one or more of, e.g., an energy decay curve, a reverberation time, a room impulse response, a sound propagation field, a transfer function etc.

The sound source 4 of the system 1 is an unmanned rotorcraft which has one or more motor-driven rotors 6, i.e., one or more electromechanical motor-drives driving the one or more rotors 6. The rotor/s 6 generate the lift of the rotorcraft 4, i.e., the rotorcraft 4 is a heavier-than-air aircraft with motor-driven fan blades or rotor blades forming the one or more rotors 6, each of which rotates about a vertical or an approximately vertical axis. The rotorcraft 4 is either a helicopter with a single rotor 6 or a multirotor rotorcraft 4, e.g., a coaxial, intermeshing or tandem helicopter, a bi-rotor rotorcraft 4, or a multicopter (including a ducted-fan multicopter), i.e., a tricopter, quadcopter (Fig. 1), hexacopter, octocopter etc.

The system 1 further comprises the microphone 5 and a processing unit 7 connected to the microphone 5, e.g., via a wireless or a wired connection 8.

For determining the sound propagation characteristic of the environment 2, the rotorcraft 4 is brought to a predetermined first position A in the environment 2 and the microphone 5 is brought to a predetermined second position B in the environment 2, which second position B is different from the first position A. At the first position A, the rotorcraft 4 generates a measuring sound n. The measuring sound n is the ego noise of the rotorcraft 4, i.e., the noise generated by the one or more rotors 6 and the one or more electromechanical motor-drives of the rotorcraft 4 during flight.

The diagram of Fig. 2 depicts an exemplary spectrum (here: a sound pressure level Lₚ in dB over the frequency f in Hz) of the ego noise generated by a rotorcraft 4. According thereto, the ego noise has a good spectral coverage over the frequency f, particularly above 1 kHz, and a few peaks below 1 kHz.

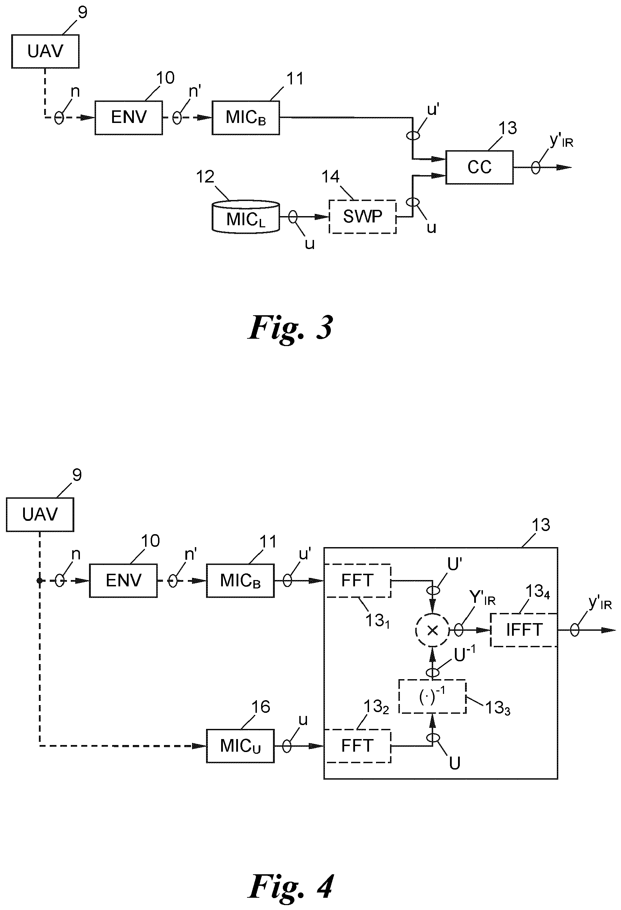

With reference to the examples of Figs. 1 and 3, the determination of the sound propagation characteristic shall now be explained in detail.

As symbolised by block 9 in the example of Fig. 3, the rotorcraft 4 generates the measuring sound n at the first position A. The generated measuring sound n propagates through the environment 2 (block 10) from the first position A via the different sound paths sᵢ to arrive at the microphone 5 as propagated measuring sound n'. The microphone 5 records (block 11) the propagated measuring sound n' to achieve the recorded measuring sound u', i.e., the measuring sound n that propagated to and is recorded by the microphone 5. The processing unit 7 has access to the recorded measuring sound u' through the connection 8.

On the other hand, the measuring sound n as such, i.e., the ego noise of the rotorcraft 4 without propagation through the environment 2, may be estimated or may have been predetermined, e.g., pre-recorded in a laboratory, which is symbolised by a memory block 12 (Fig. 3). The memory block 12 holds the ego noise available for the processing unit 7 as an available ego noise u. Hence, the available ego noise u differs from the recorded measuring sound u' in that only the latter is recorded of the propagated measuring sound n'.

In calculating block 13, the sound propagation characteristic is calculated by the processing unit 7 from the generated and the recorded measuring sounds n, u', here: from the available ego noise u corresponding to the measuring sound n and the recorded measuring sound u'. In the example of Fig. 3, the sound propagation characteristic is a room impulse response y'_{IR} which is calculated by means of cross-correlation.

It shall be noted that, when using reciprocal sound propagation measuring, the sound propagation characteristic can be determined in the direction from the first to the second position A, B or in the reverse direction from the second to the first position B, A such that the first and second positions A, B are interchangeable and the second position B may be predetermined to be the one that is easier to access with the microphone 5.

The microphone 5 may either be omnidirectional such that it records measuring sound n propagating via the different sound propagation paths sᵢ to the second position B and, thus, arrives at the microphone 5 as propagated measuring sound n' from different directions. Alternatively, the microphone 5 is composed of an array of slightly spaced omnidirectional electromechanical transducers each of which captures measuring sound n which propagates to the second position B such that, according to the principle of phased arrays, a directional determination of the propagated measuring sound n' is facilitated. In a further alternative variant, the microphone 5 is composed of a multitude of differently directed substantially coincident unidirectional electromechanical transducers, each of which captures measuring sound n which propagates to the second position B from the direction in which the transducer is directed.

In an optional embodiment, the rotorcraft 4 determines its own position in the environment 2 when generating the measuring sound n and provides the processing unit 7 with access to the determined position via a connection, e.g., a wireless connection (not shown). The processing unit 7 considers the position determined by the rotorcraft 4 at said first position A when it calculates the sound propagation characteristic.

In a further optional embodiment, the rotorcraft 4 is configured to hover at the first position A and to sweep the rotational speed of its rotor or rotors 6 and its motor-drive or motor-drives while it generates the measuring sound n. Alternatively, the rotorcraft 4 may just pass the first position A without hovering or may hover at the first position A without sweeping. When sweeping, the pitch of each rotor 6 may optionally be swept inversely to the sweeping of the rotor 6 and the motor-drive to avoid sweeping lift resulting in vertical oscillation of the rotorcraft 4 about the first position A; additionally or alternatively, when the rotorcraft 4 is a multicopter or a coaxial helicopter, the rotors 6 and motor-drives may be grouped and the rotors 6 and motor-drives of different groups may be swept inversely to achieve a sweeping pivoting movement about the rotorcraft's vertical axis, which also avoids said vertical oscillation. Due to different motor-drive and rotor speeds and, when the rotorcraft 4 pivots about its vertical axis, due to a possible directionality of the generated ego noise, also the generated measuring sound n, e.g., the peaks in the sound pressure Lₚ of the ego sound (Fig. 2), and/or the propagated measuring sound n' sweeps, which, i.a., eases cross-correlation in the processing unit 7.

When the rotorcraft 4 sweeps the rotational speed of its rotors 6 and motor-drives while generating the measuring sound n, the available ego noise u is optionally also swept by respective computing, symbolised by block 14 in Fig. 3, in order to calculate the sound propagation characteristic. In block 14, the respective rotational speed may either be estimated from the recorded measuring sound u' or (e.g., wirelessly) transmitted from the rotorcraft 4 to the processing unit 7 which computes the sweeping of the available ego noise u and calculates the sound propagation characteristic. To facilitate the computation, the memory block 12 may optionally hold the respective available ego noise u for different rotational speeds of the rotorcraft 4.

As symbolised by small dots in Fig. 1, a plurality of different first positions A₁, A₂, ..., generally Aⱼ, may optionally be predetermined, in which case the rotorcraft 4 is further configured to fly from one to another one of said first positions Aⱼ and to generate the measuring sound n at each of said first positions Aⱼ. In this case, the recording of the measuring sound n which propagates to the second position B, i.e., of the propagated measuring sound n', by the microphone 5 is repeated for each of the plurality of first positions Aⱼ. Likewise, the calculating of the sound propagation characteristic by the processing unit 7 is repeated for each of the plurality of first positions Aⱼ based on the respective recorded measuring sounds u'. Therefrom, the processing unit 7 optionally computes a sound propagation field of the environment 2 by interpolation and/or extrapolation of the sound propagation characteristic respectively determined for the plurality of first positions. Using reciprocity, the sound propagation field may be computed in either direction of sound propagation.

In the example of Fig. 4, in which the sound propagation along blocks 9, 10 and 11 is the same as in the example of Fig. 3, the rotorcraft 4 itself carries a further microphone 15 (Fig. 1) which records the ego noise generated by the rotorcraft 4 (block 16) to hold it available. The rotorcraft 4 provides the processing unit 7 with access, e.g., wireless access, to the recorded available ego noise u. In calculating block 13, the processing unit 7 may again apply cross-correlation to the recorded measuring sound u' and the available ego noise u to achieve the room impulse response y'_{IR} as described above with reference to Fig. 3. According to the example of Fig. 4, however, the calculating block 13 alternatively comprises Fourier transforming (e.g., fast Fourier transforming) the recorded measurement signal u' and the available ego noise u, respectively, (blocks 13₁, 13₂) to achieve a frequency domain representation U' of the recorded measurement signal u' and a frequency domain representation U of the available ego noise u, which latter is then inversed (block 13₃) for multiplication with the former to a transfer function Y'_{IR} of the environment 2, i.e., the frequency-domain representation Y'_{IR} of the room impulse response y'_{IR}. The transfer function Y'_{IR} may be inverse Fourier transformed (e.g., inverse fast Fourier transformed) to the room impulse response y'_{IR} in block 13₄.

It is noted that other sound propagation characteristics may be calculated by the processing unit 7 as known in the art. Moreover, calculating block 13 may apply cross-correlation or frequency domain inversion and multiplication in either of the embodiments of Figs. 3 and 4, i.e., both with or without the further microphone 15, in order to calculate the propagation characteristic. In each embodiment, the propagation characteristic may, alternatively, be calculated in a different manner known in the art, e.g., as an adaptive filter applying a least mean squares ("LMS") or a recursive least squares ("RLS") algorithm, etc.

The invention is not restricted to the specific embodiments described above but encompasses all variants, modifications and combinations thereof that fall within the scope of the appended claims.

## Claims

1. A system for determining a sound propagation characteristic of an environment (2), comprising
a sound source (4) which is configured to be brought to a predetermined first position (A) in the environment (2) and to generate a measuring sound (n) at the first position (A),
a microphone (5) which is configured to be brought to a predetermined second position (B) in the environment (2), wherein the first and second positions (A, B) are different, and to record the measuring sound (n') propagating to the second position (B), and
a processing unit (7) connected to the microphone (5) for calculating the sound propagation characteristic from the generated and the recorded measuring sounds (n, u, u'), **characterised in that**
the sound source (4) is an unmanned rotorcraft with one or more motor-driven rotors (6), and **in that** the generated measuring sound (n) is the ego noise of the rotor/s (6) and the motor-drive/s of the rotorcraft (4).

2. The system according to claim 1, **characterised in that** the microphone (5) is omnidirectional.

3. The system according to claim 1, **characterised in that** the microphone (5) is composed of an array of omnidirectional electromechanical transducers for separately recording the measuring sound (n') propagating to the second position (B) .

4. The system according to claim 1, **characterised in that** the microphone (5) is composed of a multitude of differently directed coincident unidirectional electromechanical transducers for separately recording the measuring sound (n') propagating to the second position (B).

5. The system according to any one of claims 1 to 4, **characterised in that** the rotorcraft (4) is multirotor.

6. The system according to any one of claims 1 to 5, **characterised in that** the rotorcraft (4) is further configured to hover at the first position (A) and to sweep the rotational speed of the rotor/s (6) and the motor-drive/s when generating the measuring sound (n).

7. The system according to any one of claims 1 to 6, **characterised in that** the rotorcraft (4) is further configured to determine its position in the environment (2) when generating the measuring sound (n), wherein the processing unit (7) is connected to the rotorcraft (4) and configured to consider said determined position as the first position (A) when calculating the sound propagation characteristic.

8. The system according to any one of claims 1 to 7, **characterised in that** said sound propagation characteristic calculated by the processing unit (7) is a room impulse response (y'_{IR}).

9. The system according to any one of claims 1 to 8, **characterised in that** the rotorcraft (4) is configured to fly from one to another one of a plurality of predetermined different first positions (Aⱼ) and to generate the measuring sound (n) at each first position (Aⱼ), wherein the microphone (5) is configured to record, for each of the plurality of first positions (Aⱼ), the measuring sound (n') propagating to the second position (B), and wherein the processing unit (7) is configured to repeat said calculating for each of the plurality of first positions (Aⱼ) .

10. The system according to claim 9, **characterised in that** the processing unit (7) is further configured to compute a sound propagation field of the environment (2) from the sound propagation characteristic calculated for the plurality of first positions (Aⱼ).

11. A method for determining a sound propagation characteristic of an environment (2) comprising
bringing a sound source (4) to a predetermined first position (A) in the environment (2),
bringing a microphone (5) to a predetermined second position (B) in the environment (2), wherein the first and second positions (A, B) are different,
generating, by the sound source (4), a measuring sound (n) at the first position (A),
recording, by the microphone (5), the measuring sound (n') propagating to the second position (B), and
calculating the sound propagation characteristic from the generated and the recorded measuring sounds (n, u, u'),
wherein the sound source (4) is an unmanned rotorcraft with one or more motor-driven rotors (6), and wherein the generated measuring sound (n) is the ego noise of the rotor/s (6) and the motor-drive/s of the rotorcraft (4).

12. The method according to claim 11, **characterised in that**, in said step of generating, the rotational speed of the rotor/s (6) and the motor-drive/s is swept while the rotorcraft (4) hovers at the first position (A).

13. The method according to claim 11 or 12, **characterised in that**, in said step of generating, the position of the rotorcraft (4) in the environment (2) is determined and, in said step of calculating, said determined position is considered as the first position (A).

14. The method according to any one of the claims 11 to 13, **characterised in that** the calculated sound propagation characteristic is a room impulse response (y'_{IR}).

15. The method according to any one of the claims 11 to 14, **characterised in that** a plurality of different first positions (Aⱼ) is predetermined and the steps of generating, recording and calculating are repeated for each of the different first positions (Aⱼ), wherein the rotorcraft (4) flies from one to another one of the plurality of first positions (Aⱼ) between successive repetitions.

16. The method according to claim 15, **characterised in that** a sound propagation field of the environment (2) is computed from the sound propagation characteristic calculated for the plurality of first positions (Aⱼ).
